Europäisches Patentamt

(19) European Patent Office

Office européen des brevets

(11) Numéro de publication: **0 165 839**

**A1**

(12) # DEMANDE DE BREVET EUROPEEN

(21) Numéro de dépôt: **85400947.9**

(22) Date de dépôt: **14.05.85**

(51) Int. Cl.⁴: **C 10 B 53/02**

(30) Priorité: **18.05.84 FR 8407729**

(43) Date de publication de la demande:
**27.12.85 Bulletin 85/52**

(84) Etats contractants désignés:
**AT DE IT SE**

(71) Demandeur: **FRAMATOME ET CIE.**
**Tour Fiat 1, Place de la Coupole**
**F-92400 Courbevoie(FR)**

(72) Inventeur: **Ratouis, Luc**
**3 rue Henri Cloppet**
**F-78110 Le Vesinet(FR)**

(72) Inventeur: **Girardon, Marc**
**361 rue Lecourbe**
**F-75015 Paris(FR)**

(74) Mandataire: **Moncheny, Michel et al,**
**c/o Cabinet Lavoix 2 Place d'Estienne d'Orves**
**F-75441 Paris Cedex 09(FR)**

(54) **Procédé d'utilisation du gaz de pyrolyse et installation de pyrolyse perfectionnée pour la mise en oeuvre du procédé.**

(57) L'invention a pour objet un procédé d'utilisation des gaz de pyrolyse extraits d'une installation de production de charbon de bois par pyrolyse de biomasse.

Conformément à l'invention, on fait passer la partie disponible des gaz de pyrolyse à travers une couche (35) de matière carbonée ménagée à l'intérieur d'un four de réformage (4) et constituée de particules fines non commercialisables extraites du charbon de bois (34) produit dans le four de pyrolyse (1), ladite couche de particules fines (35) étant portée à haute température par injection d'un gaz comburant, et que l'on extrait du four de réformage (4) un gaz pauvre épuré, à base de CO et $H_2$ utilisable après élimination de l'eau, pour la production d'au moins l'énergie nécessaire au fonctionnement autonome de l'installation.

./...

EP 0 165 839 A1

Procédé d'utilisation du gaz de pyrolyse et installation de pyrolyse
perfectionnée pour la mise en oeuvre du procédé

L'invention a pour objet un procédé d'utilisation des gaz de pyrolyse extraits d'une installation de production de charbon de bois par pyrolyse de biomasse.

Pour valoriser certaines catégories de bois, notamment de bois de taillis, on peut en réaliser la pyrolyse pour la production de charbon de bois destiné à diverses utilisations. A cet effet, on utilise un appareil de pyrolyse qui peut être constitué par exemple d'un four allongé, chargé d'une couche de biomasse et relié à un circuit de circulation de gaz chauds à travers cette couche. Par exemple, on place un brûleur au-dessus de la couche de biomasse pour produire les gaz chauds et le fond du four est muni d'une partie perméable, constitué par exemple d'une grille qui recouvre un caisson relié à un circuit d'aspiration. On force ainsi les gaz à traverser la couche de biomasse en transformant celle-ci en charbon de bois évacué par un dispositif d'extraction placé à l'extrémité aval du four. Les gaz de pyrolyse ayant traversés la charge sont évacués par un circuit d'aspiration muni d'un ventilateur aspirant et relié au caisson placé sous la grille.

Les gaz de pyrolyse ainsi aspirés sont brûlés dans le brûleur placé au-dessus de la charge pour produire les gaz chauds nécessaires à la pyrolyse. On peut les utiliser également pour le séchage du bois avant son enfournement dans le pyrolyseur.

Cependant, pour une certaine quantité de charbon de bois fourni par le pyrolyseur, on aspire un débit de gaz de pyrolyse bien supérieur à celui qui peut être ainsi utilisé.

Par exemple, on a constaté que pour traiter du bois dont l'humidité a été ramenée à 15 % à l'entrée du pyrolyseur, et compte tenu du débit de gaz recyclés dans le brûleur du pyrolyseur, on aspire dans le circuit d'évacuation des gaz un peu plus de 1 $Nm^3$ par kg de bois, ce gaz ayant un PCI moyen de $5 \times 10^6$ KJ/$Nm^3$.

Ainsi, en traitant une tonne par heure de bois à 15 % d'humidité on récupère, après recyclage du débit de gaz nécessaire dans le brûleur, environ 1060 $Nm^3$/h de gaz de pyrolyse. Or, le séchage de la quantité correspondante de bois n'absorbe que $2,3 \times 10^6$ KJ correspondant à un peu plus de 400 $Nm^3$ de gaz. On dispose donc pour une tonne de bois par heure d'environ 600 $Nm^3$ de gaz de pyrolyse correspondant à un pouvoir calorifique de $3 \times 10^6$ KJ Jusqu'à présent, on utilisait les gaz de pyrolyse pour alimenter des fours, des chaudières, ou des séchoirs placés à proximité du pyrolyseur, la quantité de gaz produite et sa valeur calorifique ne justifiant pas un circuit de distribution. Cependant, on ne dispose pas toujours à proximité du pyrolyseur d'appareils susceptibles d'utiliser les gaz produits, d'autant plus que, pour éviter le transport du bois, on préfère normalement le transformer immédiatement en charbon de bois à proximité du lieu de coupe c'est-à-dire, généralement, en un endroit isolé.

Par ailleurs, le charbon de bois extrait du pyrolyseur n'est pas commercialisable en totalité et, lorsqu'on le met en sac, on récupère une quantité non négligeable de particules de petites dimensions, appelées fines, qui, jusqu'à présent, étaient perdues.

L'invention a pour objet un procédé qui permet d'utiliser à la fois les fines récupérées du charbon de bois et les gaz de pyrolyse et de rendre ainsi autonome en énergie l'installation de production de charbon de bois en utilisant de façon optimale le pouvoir calorifique du bois coupé.

Conformément à l'invention, on fait passer la partie disponible des gaz de pyrolyse à travers une couche de matière carbonée ménagée à l'intérieur d'un four de réformage et constituée de particules fines non commercialisables extraites du charbon de bois produit dans le four de pyrolyse, ladite couche de particules fines étant portée à haute température par injection d'un gaz comburant, et l'on extrait du four de réformage un gaz pauvre épuré à base de $CO$ et $H_2$ utilisable, après élimination de l'eau, pour la production de l'énergie nécessaire au fonctionnement autonome de l'installation.

L'installation pour la mise en oeuvre du procédé comprend donc un moyen de récupération dans le charbon de bois extrait du four de pyrolyse des particules fines de dimensions inférieures à la limite commercialisable, pour former à l'intérieur du four de réformage une couche de particules fines récupérées, des moyens d'injection d'un gaz comburant dans la couche de particules pour le chauffage de celle-ci à haute température, un circuit d'aspiration des gaz de pyrolyse à travers la charge par lequel est évacué un gaz pauvre épuré et des moyens de production d'énergie pour le fonctionnement autonome de l'installation à partir de ce gaz pauvre.

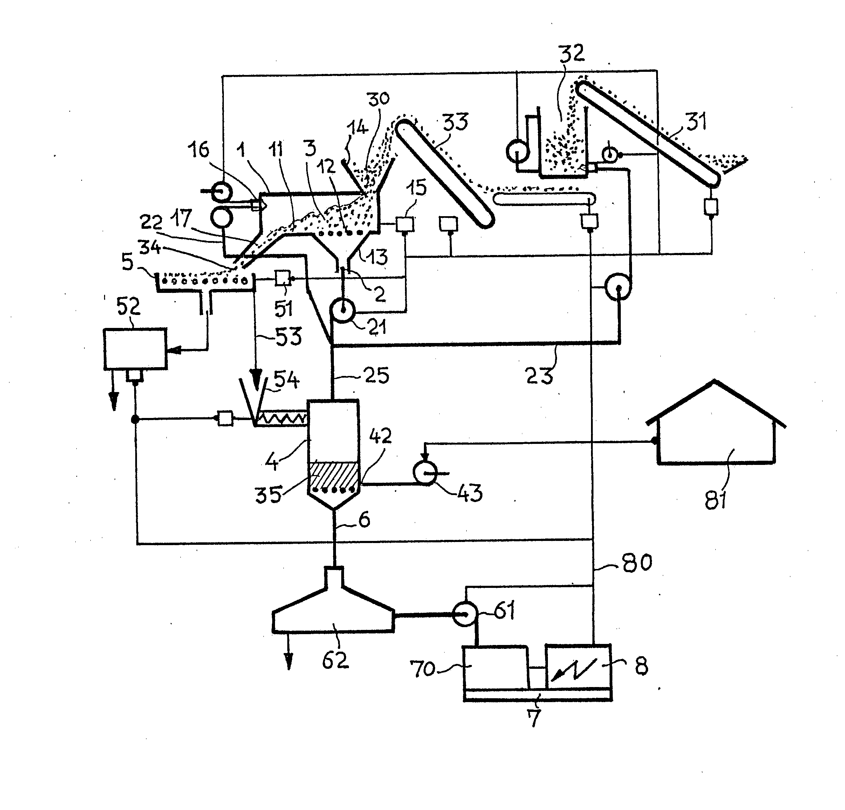

L'invention va être décrite avec plus de détails en se référant à un mode de réalisation donné à titre d'exemple et représenté schématiquement sur la figure annexée.

L'installation comprend un four de pyrolyse 1 constitué, dans l'exemple représenté, d'une enceinte allongée munie d'un fond 11 horizontal ou légèrement incliné et constitué, au moins du côté amont, d'une grille 12 qui couvre un caisson 13 relié à un circuit aspirant 2. La matière combustible, constituée par exemple de bois coupé en morceaux est chargée par un élévateur 31 dans un four de séchage 32 qui permet de faire passer le taux d'humidité de la teneur normale d'environ 50 % à une teneur de 15 % en eau. La matière 30 ainsi séchée évacuée du sécheur 32 est chargée par un élévateur 33 dans la trémie 14 de chargement du four. A l'intérieur de ce dernier, un dispositif constitué par exemple d'un piston de poussée entrainé par un moteur 15 fait avancer progressivement la matière le long du fond incliné 11. La matière forme ainsi à l'intérieur de l'enceinte une couche au-dessus de laquelle on fait arriver des gaz chauds produit par un brûleur 16 alimenté en gaz comburant et combustible. Le caisson 13 est relié par le circuit 2 à un ventilateur aspirant 21 et porte ainsi les gaz chauds produits par le brûleur 16 à traverser la couche de matière 3. Ce passage des gaz chauds à travers le bois provoque la transformation par pyrolyse de la charge 3 en charbon de bois qui est évacué à l'extrémité aval du four par un dispositif d'extraction 17. Les gaz chauds traversant la couche de matières se chargent en produit de distillation du bois et le gaz de pyrolyse aspiré par le caisson 13 contient de la vapeur d'eau, de l'azote, du gaz carbonique, de l'hydrogène, et différents hydrocarbures en phase vapeur. Ce gaz bénéficie d'un pouvoir calorifique non négligeable et est donc utilisé directement dans le brûleur 16 dans lequel il est injecté par un circuit 22 branché en dérivation sur le circuit aspirant 2. Le circuit d'aspiration 2 alimente également une autre branche dérivée 23 qui dirige une autre partie du gaz de pyrolyse vers le brûleur du sécheur 32.

La partie disponible des gaz de pyrolyse est évacuée par une autre branche 25 du circuit d'aspiration 2 qui débouche à la partie supérieure d'un four à cuve 4 destiné à réaliser le réformage des gaz de pyrolyse.

Le four à cuve 4 est chargé d'une couche de matière carbonée 35 constituée de particule fines récupérées dans le charbon de bois 34 produit par le four de pyrolyse. En effet, le dispositif d'extraction 17 débouche dans un organe de criblage 5, actionné par le moteur 51, qui permet de séparer le charbon de bois de dimensions commercialisables des fines inférieures à une limite donnée. Le charbon de bois est dirigé vers un appareil d'ensachage 52 alors que les fines sont dirigées par un circuit d'extraction 53 vers une trémie de stockage 54 qui permet d'introduire à l'intérieur du four 4 un débit dosé de fines pour former la couche 35.

A sa base, le four de réformage 4 est branché sur un circuit d'aspiration 6, relié à un ventilateur aspirant 61 et sur lequel est placé un condenseur 62. Les gaz de pyrolyse introduits par le circuit 25 à la partie supérieure du four à cuve 4 et aspiré par le circuit 6 traverse donc la couche de fines de carbone 41 qui est portée à une haute température, de l'ordre de 1100 à 1200°C, grâce à de l'air introduit par des injecteurs 42 alimentés par un ventilateur 43.

De la sorte, les hydrocarbures en phase vapeur sont transformés en CO et $H_2$ dans le four 4 et on aspire par le circuit 6 un gaz propre qui, après élimination de l'eau, peu contenir environ 10 % d'hydrogène et 20 % de monoxyde de carbone. Ce gaz est directement utilisable dans un groupe électrogène 7 comprenant un moteur thermique 70 qui peut être un moteur à piston ou une turbine à gaz et qui entraine un alternateur 8. L'alternateur fournit du courant sur une ligne électrique 80 qui peut alimenter non seulement tous les moteurs des différents organes et ventilateurs de l'installation, mais également l'ensemble d'une Base-vie schématisée en 81.

A titre d'exemple, le gaz de pyrolyse aspiré par le circuit 2 peut avoir la composition suivante :

5,6 % $H_2$ ; 3,4 % $CH_4$ ; 0,6 % Ar ; 28, 4 % $N_2$ ; 14,9 % $CO_2$ ; 7,8 % CO ; 37,6 % $H_2O$ ; 0,37 % $C_2H_4$ ; 0,12 % $C_2H_6$ ; 0,06 % $C_2H_2$ ; 1,15 % d'équivalence moyenne $C_6H_7O_2$.

Le débit moyen des gaz aspirés par le circuit 2 est de 1,06 $Nm_3$ par kg de bois à 15 % d'humidité, ayant un PCI moyen de 5 x $10^6$ $KJ/Nm^3$.

Le séchage de la quantité correspondante de bois vert consomme environ 2,3 x $10^6$ KJ soit 460 $Nm_3$ par heure de gaz.

On aspire donc par la branche 25 du circuit d'aspiration 2 un débit de gaz disponible d'environ 600 $Nm_3$ par tonne de bois, ayant un pouvoir calorifique de 3 x $10^6$ KJ Dans le four de réformage 4, on réalise la décomposition des gaz $C^nH^m$ avec production d'hydrogène, de monoxyde et d'oxyde de carbone et de vapeur d'eau, et, secondairement, de méthane. Les besoins thermiques pour réaliser cette transformation sont d'environ 5,6 x $10^5$ $KJ/Nm^3$ de gaz. Or un pyrolyseur consommant une tonne par heure de bois produit environ 300 Kg par heure de charbon de bois dont on récupère 15 kg par heure de fines non commercialisables. Le pouvoir calorifique de ces fines, qui est de $4,8 \times 10^5$ KJ par heure est largement suffisant pour les besoins thermiques de la décomposition des hydrocarbures.

On obtient donc à la sortie du four à cuve, avant refroidissement et filtrage, un mélange gazeux ayant pour composition moyenne :

7,7 % $H_2$ ; 35 % $N_2$ ; 12,5 % $CO_2$ ; 14,5 % CO ; 2,5 % $CH_4$ ; 27,8 % $H_2O$.

Un tel mélange a un Pouvoir Calorifique Inférieur (PCI) de l'ordre de $3,6 \times 10^6$ KJ/$Nm^3$.

Après refroidissement et élimination de l'eau, on obtient un gaz ayant comme composition moyenne :

10,6 % $H_2$ ; 48,5 % $N_2$ ; 17,4 % $CO_2$ ; 20 % CO ; 3,5 % $CH_4$, ayant un Pouvoir Calorifique Inférieur supérieur à 1100 kcal/$Nm^3$, ce qui correspond à un peu plus de $2,7 \times 10^6$ KJ/h pour un débit de gaz d'environ 650 $Nm^3$/h.

Mais, pour fournir un kW électrique, un groupe électrogène a besoin d'environ 11,7 à 12,1 KJ. Le gaz obtenu à la sortie du ventilateur 61 permet donc d'actionner un groupe électrogène ayant une puissance d'environ 200 kW.

Or on peut considérer que l'ensemble du pyrolyseur et de ses auxiliaires, séchoirs à bois, trieuses etc ... absorbent environ 70 kW. Il reste donc de disponible 130 kW qui permettent par exemple d'actionner une sciérie et une Base-vie pour le personnel.

Les calculs précédents qui ont été faits pour une production moyenne montrent donc que, grâce à l'invention, on peut, en utilisant la quasi totalité du pouvoir calorifique du bois, faire fonctionner de façon autonome une exploitation forestière fournissant du charbon de bois dans un site qui pourrait être complètement isolé et/ou utiliser les gaz d'échappement du groupe électrogène pour satisfaire les besoins du séchage du bois.

Bien entendu, l'installation n'a été décrite qu'à titre d'exemple, et pourrait faire l'objet de variantes en restant dans le cadre de protection revendiqué. En particulier, on pourrait utiliser un autre type de pyrolyseur pour la production du charbon de bois.

0165839

6

<u>REVENDICATIONS</u>

1.- Procédé d'utilisation des gaz de pyrolyse extraits d'une installation de production de charbon de bois par pyrolyse de biomasse, comprenant un four de pyrolyse (1) chargé d'une couche de biomasse et muni de moyens de circulation de gaz chauds à travers la couche de biomasse (3) pour la transformation par pyrolyse de celle-ci en charbon de bois (34) évacué à une extrémité aval du four (1), les gaz de pyrolyse, ayant traversé la charge, étant extraits du four par un circuit d'évacuation (2) qui récupère une partie desdits gaz de pyrolyse pour la production des gaz chauds et le séchage de la biomasse et dirige la partie disponible de ces gaz de pyrolyse dans un four de réformage (4), caractérisé par le fait que, dans le four de réformage (4), on fait passer la partie disponible des gaz de pyrolyse à travers une couche (35) de matière carbonée constituée de particules fines non commercialisables extraites du charbon de bois (34) produit dans le four de pyrolyse (1), ladite couche de particules fines (35) étant portées à haute température par injection d'un gaz comburant, et que l'on extrait du four de réformage (4) un gaz pauvre épuré, à base de CO et $H_2$ utilisable après élimination de l'eau pour la production d'au moins l'énergie nécessaire au fonctionnement autonome de l'installation.

2.- Installation perfectionnée de production de charbon de bois par pyrolyse de biomasse, comprenant un four de pyrolyse (1) muni d'un fond (11) comportant une partie perméable (12), des moyens de chargement de biomasse (30) à une extrémité amont du four (1) pour la formation d'une couche (3) sur le fond, des moyens (16) de production de gaz chauds au-dessus de la couche (3) de biomasse, un circuit d'aspiration des gaz chauds à travers la couche (3) pour la transformation par pyrolyse de la biomasse en charbon de bois et des moyens d'évacuation du charbon de bois (34) à l'extrémité aval du four (1), le circuit (2) d'aspiration des gaz issus de la pyrolyse alimentant les circuits dérivés (23, 22) d'alimentation d'un moyen de séchage (32) de la biomasse et des moyens (16) de production de gaz chauds au-dessus de la charge (3), et un four de réformage dans lequel débouche un circuit (25) d'évacuation des gaz de pyrolyse disponibles, l'installation étant caractérisée en ce qu'elle comprend un moyen (5) de récupération dans le charbon de bois extrait du four des particules fines de dimensions inférieures à la limite commercialisable pour former à l'intérieur du four de réformage (4) une couche (35) de particules fines récupérées, des moyens (42, 43) d'injection d'un gaz comburant dans la couche de particules (35) pour le chauffage de celle-ci à haute température, un circuit (6) d'aspiration des gaz de pyrolyse à travers la charge, par lequel est évacué un gaz pauvre épuré à base de CO et $H_2$ et des moyens (7, 8) de production d'énergie pour le fonctionnement autonome de l'installation à partir du gaz pauvre sortant du four de réformage.

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int Cl.4) |
|---|---|---|---|
| Y | FR-A- 897 863 (RANCHON) <br> * Résumé; page 1, lignes 21-53; figures * | 1,2 | C 10 B 53/02 |
| Y | FR-A- 976 559 (BRACKERS DE HUGO) <br> * Résumé 1,2; figure 1 * | 1,2 | |
| A | FR-A-2 448 566 (ATMOSPHERE-REGULATION-CONTROLE) <br> * Revendications 1-3; figure 2 * | 1,2 | |

DOMAINES TECHNIQUES
RECHERCHES (Int. Cl.4)

C 10 B

Le présent rapport de recherche a été établi pour toutes les revendications

| Lieu de la recherche | Date d'achèvement de la recherche | Examinateur |
|---|---|---|
| LA HAYE | 27-08-1985 | MEERTENS J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                  

& : membre de la même famille, document correspondant

OEB Form 1503. 03.82